# EUROPEAN PATENT SPECIFICATION

(11) **EP 4 155 366 B1**
(45) Date of publication and mention of the grant of the patent: **19.03.2025**
(21) Application number: 20953064.1
(22) Date of filing: 05.11.2020
(51) Int. Cl.: C09K 11/84, C09K 11/02

(54) **POLYSULFIDE UP-CONVERSION LUMINESCENT MATERIAL**
POLYSULFID-AUFWÄRTSUMWANDLUNGSLEUCHTSTOFF
MATÉRIAU LUMINESCENT DE CONVERSION ASCENDANTE À MATRICE POLYSULFURE

(30) Priority: 14.09.2020 CN 202010958933
(43) Date of publication of application: 29.03.2023
(73) Proprietor: Dalian Minzu University, Dalian, Liaoning 116600 (CN)
(72) Inventor: DONG, Bin, Dalian, Liaoning 116600 (CN); LUO, Xixian, Dalian, Liaoning 116600 (CN)
(74) Representative: Murgitroyd & Company
(86) International application number: PCT/CN2020/126670
(87) International publication number: WO 2022/052279

(56) References cited:
- JP-A- 2004 161 863
- US-A1- 2008 179 532
- GOH JAE-MO ET AL: "Optical properties of undoped and Ho3+, Er3+, and Tm3+-doped BaAl2S4 and BaAl2Se4 single crystals", JOURNAL OF APPLIED PHYSICS, AMERICAN INSTITUTE OF PHYSICS, 2 HUNTINGTON QUADRANGLE, MELVILLE, NY 11747, vol. 88, no. 7, 1 October 2000 (2000-10-01), pages 4117 - 4121, XP012051704, ISSN: 0021-8979, DOI: 10.1063/1.1289485
- HEMPSTEAD M ET AL: "Spectral properties of Er^3^+-doped gallium lanthanum sulphide glass", JOURNAL OF NON-CRYSTALLINE SOLIDS, NORTH-HOLLAND PHYSICS PUBLISHING. AMSTERDAM, NL, vol. 208, no. 1, 1 November 1996 (1996-11-01), pages 56 - 63, XP004031816, ISSN: 0022-3093, DOI: 10.1016/S0022-3093(96)00203-7
- YANG YANMIN ET AL: "A Novel Multifunctional Upconversion Phosphor: Yb 3+ /Er 3+ Codoped La 2 S 3", JOURNAL OF THE AMERICAN CERAMIC SOCIETY, vol. 97, no. 6, 4 February 2014 (2014-02-04), US, pages 1769 - 1775, XP093090078, ISSN: 0002-7820, DOI: 10.1111/jace.12822
- ZHANG JI-SEN, ZHANG LI-GUO，REN JIAN-YUE，DUAN PEI-HUA，LUO YONG-SHI，LV SHAO-ZHE: "Stocks and Anti-Stocks Light-emitting Properties in Yb3 + -and Er3 + -doped NaYS2 Powder Materials at Room Temperature", CHINESE JOURNAL OF LUMINESCENCE, GAI KAN BIANJIBU, CHANGCHUN, CN, vol. 34, no. 7, 31 July 2013 (2013-07-31), CN , pages 824 - 828, XP055911629, ISSN: 1000-7032, DOI: 10.3788 /fgxb20133407.0824
- GERNER, P. GUDEL, H.U.: "Absorption and upconversion light emission properties of Er^3^+ and Yb^3^+/Er^3^+ codoped NaYS"2", CHEMICAL PHYSICS LETTERS, ELSEVIER BV, NL, vol. 413, no. 1-3, 15 September 2005 (2005-09-15), NL , pages 105 - 109, XP005051253, ISSN: 0009-2614, DOI: 10.1016/j.cplett.2005.07.072

## Description

### Technical Field

The present invention belongs to the field of new optical function materials, in particular to a polysulfide upconversion phosphor.

### Background

Luminescence can be classified into multiple types such as photoluminescence, electroluminescence, cathodoluminescence, radioactive luminescence, chemiluminescence and bioluminescence, wherein photoluminescence can be classified into conventional photoluminescence [hereinafter referred to as conventional luminescence] and upconversion luminescence. The wavelength of incident excitation light of the conventional luminescence is less than the wavelength of emission light, and its characteristics are that luminescence efficiency is high and the quantum efficiency can reach or even exceed 100%. Relative to conventional luminescence, upconversion luminescence can convert infrared light into ultraviolet or visible light. Its unique luminescence characteristics can be applied to the fields of biomedicine, solar cells, infrared anti-counterfeiting and laser display. Thus, upconversion luminescence is widely concerned. The upconversion luminescence needs an activator or an energy transfer process between the activator and a sensitizer, which requires the intermediate level of luminescent ions to have a long life. At present, there are not many kinds of elements that can achieve upconversion luminescence at room temperature, most of which are lanthanides. Compared with other lanthanides, Yb ion has a large absorption cross section (11.7× 10⁻²¹ cm²) and a simple energy level structure, and is easy to achieve high concentration doping. When 980 nm infrared light is used as the excitation source, Yb ion as a sensitizer can significantly enhance the upconversion luminescence of the material [(1) F. Auzel, Upconversion and anti-Stokes processes with f and d ions in solids, Chem. Rev., 2004, 104, 139-174]. Since the wavelength of the incident excited light of upconversion luminescence is larger than the wavelength of the emitted light, it is difficult to achieve high luminescence efficiency. Up to now, the maximum quantum efficiency of the upconversion phospher is still not up to 10%, and most of the maximum quantum efficiency is only 1% or lower.

In order to further increase the luminescence efficiency of the upconversion phospher, in addition to selecting luminescent ions with high efficiency emission levels, sensitized ions and appropriate excitation channels, it is also necessary to reduce the probability of non-radiative transition of the material. The selection of appropriate substrate materials is another most direct method for increasing the upconversion luminescence efficiency. The selection of substrate lattices not only determines the relative spatial positions between doped ions, but also affects the type and coordination number of anions around the doped ions. The interaction between the substrate lattices and the doped ions has great influences on the upconversion luminescence characteristics and luminescence efficiency of the materials. There are two main criteria for the selection of the substrate materials: (1) the selection of the substrate materials with low phonon energy can reduce the multi-phonon non-radiative relaxation, extend the lifetime of excited states, and increase the upconversion luminescence efficiency; (2) if the substrate materials with low crystal structure symmetry are selected, the f-f electric dipole transition of the upconversion luminescence is forbidden according to the parity selection rule of the lanthanide electron transition. However, in the substrate with low crystal symmetry, the electric dipole transition of the 4fⁿ configuration is possible due to the odd order term of the crystal field, thereby improving the upconversion luminescence and luminescence efficiency.

According to the above criteria, the substrate materials with high upconversion luminescence efficiency are screened:
(1) Rare earth halides: fluorides, chlorides, bromides and iodides having very low phonon energy and capable of obtaining efficient upconversion luminescence. The chemical properties of chlorides, bromides and iodides are unstable and deliquescent, and the preparation process is complicated, thereby limiting their practical application. Fluorides solve the problem of easy deliquescence to some extent, retain the characteristic of low phonon energy, and are the most widely used and studied substrate currently. β-NaYF₄:Yb,Er and β-NaYF₄:Yb,Tm are currently considered to be the upconversion phosphers with the highest luminescence efficiency [(2) K. W. Krämer, D. Biner, G. Frei, H. U. Güdel, M. P. Hehlen, S. R. Lüthi, Hexagonal Sodium Yttrium Fluoride Based Green and Blue Emitting Upconversion Phosphors, Chem. Mater., 2004, 16, 1244]. However, the preparation environments needed by the fluorides are also harsh, and will corrode equipment and cause environmental pollution in the production process.
(2) Rare earth oxysulfide: the oxysulfide not only has low phonon energy, but also has the advantages of good chemical stability and thermal stability (high melting point: 2000-2200°C), strong oxidation resistance, high radiation resistance, low toxicity, and insolubility in water. High efficiency upconversion luminescence has been obtained in the Y₂O₂S substrate, For example, the upconversion luminescence brightness of 980 nm excited Y₂O₂S:Yb, Ho may be the highest among known materials [(3) Luo X X, Cao W H, Upconversion luminescence of holmium and ytterbium co- doped yttrium oxysulfide phosphor, Mater. Lett., 2007, 61 (17): 3696 - 3700]. However, the rare earth oxysulfide has high covalent bond properties, complex preparation technology and difficult production.
(3) Oxides: the phonon energy of the oxides is high; and most of the oxides are non-toxic, good in chemical stability, simple in the preparation technology and low in requirements for the production environments. In addition, the active ions in the oxide single crystal have narrow fluorescence spectral lines, higher gain, and better hardness, mechanical strength and thermal conductivity than glass. Therefore, the oxide single crystal with stable physical and chemical properties is often used as the substrate of upconversion laser materials. Rare earth composite oxides such as Y₂O₃/Gd₂O₃, Bi₂O₃ and phosphate have better upconversion luminescence characteristics, but the upconversion luminescence efficiency is still the lowest among the above three materials.

Sulfide is an excellent conventional phosphor substrate, and has been widely used in the fields of photoluminescence, electroluminescence, cathodoluminescence and radioactive luminescence. Transition metal sulfides such as ZnS:Cu and ZnS:Ag are excellent conventional materials of photoluminescence, electroluminescence, cathodoluminescence and radioactive luminescence. Alkaline earth metal sulfides such as CaS can be used in long afterglow materials [(4) Hu Xuefang, Chinese Invention Patent Application, Preparation method for red phospher of rare earth europium-activated calcium sulfide or alkaline earth sulfide, CN1916109A] and electron trapping materials [(5) Zhang Jiahua, Wang Ying, Zhang Xia, et al., Chinese Invention Patent, a sulfide-based three-doped electron trapping material and a preparation method thereof, ZL201210483728.5]. Rare earth sulfide is an excellent high-grade pigment, and thus is difficult to apply to luminescence [(6) Yuan Haibin, Zhang Jianhui, Yu Ruijin et al., Synthesis of rare earth sulfides and their UV-vis absorption spectra, J. Rare Earths, 2009, 27, 308]. Alkaline earth ternary sulfide has a suitable band gap, is an excellent conventional luminescent substrate material, and can be used in the field of LED lighting lamps [(7) Zhou Mingjie and Wang Ronghao, Chinese Invention Patent Application, Alkaline earth-rare earth ternary sulfide phospher and preparation method thereof, CN104119916A. (8) Hao Chuanxin and Xiong Yongqiang, Chinese Invention Patent, Metal nanoparticle doped ternary sulfide phospher and preparation method, ZL201310089574.6. (9) Lian Shixun; Tian Keming; Yin Dulin; Li Chengzhi; Zhu Ailing; Liu Limin; Zeng Lihua; Zhang Huajing, Chinese Invention Patent Application, Erbium-activated alkaline earth rare earth sulfide red phospher CN1919968A. (10) Yuta M M, White W B. Photolumineseenee of sulfide phosphors with the MB2S4 composition. J. Electrochem. Soc. 1992, 139, 2347-2352. (11) Lian Shixun, Tian Keming, Yin Dulin, et al., Synthesis and characterization of a new red phosphor MY2S4:Er3+(M=Sr2+, Ba2+), Chemical Journal of Chinese Universities, 2007, 28, 1024-1026. (12) Zhao Junfeng, Chen Qian, Rong Chunying, et al., Synthesis and luminescence characteristics of yellow phosphor Ba(Y1-0.5x-yAly)2S4:xHo3+ for white LED. Chinese Journal of Inorganic Chemistry. 2011, 27, 1363-1367. (13) Xu Jian, Zhang Jianhui, Zhang Xinmin et al., Study on luminescence properties of Ga2S3:Eu2+ and SrGa2+xS4+y:Eu2+ series phosphors, Journal of Rare Earths, 2003, 21, 635-638. (14) Tagiev BG, Abushov SA, Tagiev OB, Photoluminescence of CaGa2S4:Pr Polycrystals, Optics and Spectroscopy, 2016, 120, 403-407. (15) Tagiyev BG, Tagiyev OB, Mammadov AI, Structural and luminescence properties of CaxBa1-xGa2S4:Eu2+ chalcogenide semiconductor solid solutions, Physica B-Condensed Matter, 2015, 478, 58-62. (16) Guo CF, Zhang CX, Lu YH, et al., Luminescent properties of Eu2+ and Ho3+ co-doped CaGa2S4 phosphor, Physica Status Solidi A, 2004, 201, 1588-1593. (17) Guo Feng, Zhang Chunxiang, Lv Yuhua, et al., Effect of Ho3+ on the luminescent properties of CaGa2S4:Eu2+, Journal of Rare Earths, 2004, 22, 591-595.], fiber optic amplifier [(18) S.D. Setzler, P.G. Schunemann, T.M. Pollak, Calcium Gallium sulphide (CaGa2S4) as a high gain erbium host, US6714578 B2, 2002], electroluminescence [(19) Mitsuhiro Kawanishi, Noboru Miura, Hironaga Matsumoto et al., New red-emitting CaY2S4: Eu thin-film electroluminescent devices, Jap. J. Appl. Phys. Part 2-Letters, 2003, 42, (1A-B), L42-L43. (20) Mamoru Kitaura, Senku Tanaka, Minoru Itoh et al., Excitation process of Ce3+ and Eu2+ ions doped in SrGa2S4 crystals under the condition of multiplication of electronic excitations, J. Lumin., 2016, 172, 243-248] or laser [(21) Kim MY, Baik SJ, Kim WT et al., Optical properties of undoped and Co2+-, Ho3+-, Er3+-, and Tm3+-doped CaGa2S4, CaGa2Se4, CaIn2S4, and CaIn2Se4 single crystals, J. Korean Phys. Soc., 2003, 43, 128-134. (22) Nostrand MC, Page RH, Payne SA et al. Room-temperature laser action at 4.3-4.4 µm in CaGa2S4: Dy3+, Optics Letters, 1999, 24, 1215-1217].

The rare earth polysulfide has low phonon energy equivalent to the chloride, and has good chemical stability. For example, the highest phonon energy of NaYS₂ is 279 cm⁻¹, which is lower than the phonon energy of β-NaYF₄(418 cm⁻¹) with the highest upconversion luminescence efficiency at present. NaYS₂ belongs to the low symmetry crystal system, and conforms to the conditions of serving as an ideal upconversion substrate material. The upconversion luminescence material that takes NaYS₂ as the substrate should have higher upconversion luminescence efficiency. The rare earth sulfide has been used for the high-grade pigment for a long time and is often sensitized by Yb ions. However, there are very few reports on the upconversion luminescence of sulfide substrates.

Higuchi et al. reported the upconversion luminescence of Er³⁺ ions in Ga₂S₃-Ges₂-La₂S₃ glasses at 800 nm and 980 nm excitation at first, but its green upconversion luminescence quantum efficiency is less than half of fluoride glass [(23) H. Higuchi, M. Takahashi, Y. Kawamoto, Optical transitions and frequency upconversion emission of Er3+ ions in Ga2S3-GeS2-La2S3 glasses, J. Appl. Phys., 1998, 83, 19]. In addition, the research of Pascal et al. showed that in pure sulfides, the LMCT absorption edge of S²⁻→Yb³⁺ is less than 20000 cm⁻¹ and overlaps with the ²H_{11/2}, ⁴S_{3/2} and ⁴F_{7/2} energy levels of Er³⁺. The luminescence intensity of the upconversion luminescence phospher of NaYS₂ excited by 980 nm and co-doped by Yb³⁺ and Er³⁺ is decreased by two orders of magnitude. Therefore, it is generally accepted that the pure rare earth sulfide is not an effective substrate material for the traditional Yb³⁺ sensitized upconversion luminescence [(24) Pascal Gerner, Hans U. Güdel, Absorption and upconversion light emission properties of Er3+ and Yb3+/Er3+ codoped NaYS2, Chem. Phys. Lett., 413 (2005) 105-109. (25) Zhang Jisen, Zhang Liguo, Ren Jianyue, et al., Stocks and Anti-Stocks luminescence of Yb3+ and Er3+ doped NaYS2 powder material at room temperature, Chinese Journal of Luminescence, 2013, 34(7), 824-828].

Up-conversions phosphors are disclosed in Goh Jae-Mo et al, Journal of Applied Physics, Vol.88, no. 7, 1 October 2000, pages 4117-4121, Hempstead M et al., Journal of Non-Crystalline Solids, vol.208, no. 1, November 1996, pages 56-63 and Yang Yanmin et al., Journal of the American Ceramic Society, vol. 97, no.6, February 2014, pages 1769-1775.

### Summary

In view of the above defects of the prior art, the present invention provides a polysulfide upconversion phosphor according to claim 1 and 2 with high luminescence efficiency, which realizes upconversion luminescence of three primary colors of red, green and blue, and upconversion luminescence of ultraviolet and near-infrared light through multi-wavelength excitation. The phosphor has the advantages of high upconversion luminescence brightness, stable chemical properties and good biocompatibility.

The present invention has the following technical solution:
A polysulfide upconversion phosphor uses polysulfide as a substrate and rare earth ions as activators, and has a general formula of composition: *m*A₂S·*n*BS·*k*C₂₋ₓS₃:Dₓ, wherein A is one or more than one of Li, Na, K, Rb and Cs, and B is one or more than one of Be, Mg, Sr, Ba, Zn, Cd and Cs; C is one or more than one of La, Gd, Lu, Y, Sc, Al, Ga and Bi; D is one or more than one of Ho, Er, Tm and Pr, and Mo, W, Ce, Sm, Tb, Yb, Eu or Nd is co-doped in D; x=0.0001-2;
n=0-0.1, m = 0.8-1.2 and k = 0.4-0.6;
   m=0-0.2, n = 0.8-1.2 and k = 0.8-1.2; or
m=0-0.2, n = 4.5-5.5 and k =1.8-2.2.

The phosphor can emit ultraviolet, blue, blue-green, green, red and near-infrared light when excited by near infrared light at 750-1650 nm.

In the upconversion phosphor with general formula of composition of *m*A₂S·*n*BS·*k*C₂₋ₓS₃:Dₓ, when D contains Er, a preferred x value is 0.05-2; the ranges of excitation wavelengths are 1450-1600 nm, 920-1150 nm, and 780-860 nm; and the three excitation wavelengths can be used separately or simultaneously.

In the upconversion phosphor with general formula of composition of *m*A₂S·*n*BS·*k*C₂₋ₓS₃:Dₓ, when D contains Ho, a preferred x value is 0.02-2 and the used range of excitation wavelengths is 1100-1190 nm.

In the upconversion phosphor with general formula of composition of *m*A₂S·*n*BS·*k*C₂₋ₓS₃:Dₓ, when D contains Tm, a preferred x value is 0.01-2; the used ranges of excitation wavelengths are 1180-1260 nm and 760-850 nm; and the two excitation wavelengths can be used separately or simultaneously.

The present invention has the following beneficial effects:
The polysulfide with *m*A₂S·*n*BS·*k*C₂₋ₓS₃:Dₓ as a general chemical formula has very low phonon energy, belongs to a low-symmetry crystal system, and is an ideal upconversion phosphor substrate. Under the condition of preferably selecting the appropriate concentration of ion doping, because the distance between doped ions is far greater than that of conventional phosphor, high-concentration doping and the reduction of radiation-free relaxation can be achieved. The upconversion luminescence efficiency is higher than that of conventional NaYF₄:Yb, Er, and multi-wavelength excitation can be achieved at the same time. Especially, infrared light in the range of 1450-1600 nm has a safe wavelength for human eyes. When the light source of this band is used as an excitation source, the present invention can also reduce the protection level of application scenarios or does not use protective equipment to extend the application range, and the brightness is the highest, which is particularly beneficial to the application.

### Description of Drawings

Fig. 1 shows the emission spectrum of NaY_{0.9}S₂: Er_{0.1} sample under 1550 nm excitation in embodiment 18 of the present invention.
Fig. 2 is a data diagram of NaY_{0.9}S₂: Er_{0.1} and NaYF₄:Yb, Er in embodiment 18 of the present invention, wherein (a) is a comparison diagram of brightness data, (b) is a curve graph of change of brightness with the excitation power of 980 and 1550 nm lasers, and (c) is a luminescence photo of NaY_{0.9}S₂: Er_{0.1} under the excitation of 980 and 1550 nm lasers.
Fig. 3 shows the emission spectrum of NaY_{0.9}S₂: Er_{0.1}@NaY_{0.8}S₂:Yb_{0.1}, Er_{0.1} sample under 980 nm excitation in embodiment 60 of the present invention.
Fig. 4 shows the emission spectrum of NaGd_{0.9}S₂: Er_{0.1}@NaGd_{0.78}S₂:Er_{0.18}, Ho_{0.05} sample under 980 nm excitation in embodiment 61 of the present invention.
Fig. 5 shows the emission spectrum of NaY_{0.8}S₂:Er_{0.10}, Nd_{0.10}@NaY_{0.89}S₂: Yb_{0.08}, Nd_{0.01}, Tm_{0.02} sample under 980 nm excitation in embodiment 62 of the present invention.

### Detailed Description

Different compositions and luminescence properties of the polysulfide of the present invention are described below through specific embodiments.

Reference embodiment 1: green upconversion phosphor of commercial β-NaYF₄:Yb,Er.

Reference embodiment 2: blue upconversion phosphor of commercial β-NaYF₄:Yb,Tm.

Reference embodiment 3: red upconversion phosphor of commercial Y₂O₃:Yb,Er.

The sample of the present invention is prepared by a solid phase reaction method, and raw materials are weighed according to the molar ratio of the constituent elements. The raw materials may be oxides, carbonates, oxalates, nitrates, acetate and sulfates of the elements mentioned in the technical solution. The raw materials are porphyrized and mixed evenly by a dry mixing method, put into a crucible, placed in a high temperature furnace, and calcined in a vulcanization atmosphere (such as H₂S and CS₂) at 900-1400°C for 1-50 h. The calcination time is adjusted according to the amount of the materials. To improve the brightness, a small amount of cosolvent, such as 0-20 wt% of AF and/or BF₂, including NH₄Cl, NH₄F, MgF₂, CaF₂, SrF₂ and BaF₂, can be added to the raw materials, which can significantly improve the upconversion luminescence efficiency.

The present invention measures the luminescence brightness or luminescence intensity of the sample to evaluate the luminescence efficiency. The specific measurement method of the luminescence brightness comprises: placing the sample in a black disk with a diameter of 10 mm and a depth of 5 mm, and flattening the sample with a glass sheet to eliminate the influence caused by scattering. An excitation light source is a semiconductor laser. For visible light samples, after the sample is irradiated by a laser, the brightness of the sample is measured by a brightness meter. Commercial β-NaYF₄:Yb,Er (green), β-NaYF₄:Yb,Tm (blue) and Y₂O₃:Yb,Er (red), which have the highest upconversion luminescence efficiency at present, are used as reference samples. For invisible samples, compared with a method for measuring the luminescence intensity by a spectrometer, all test conditions are consistent in a set of embodiments.

Embodiment 1: Y₂O₃ (99.99%) and Er₂O₃ (99.99%) are used as initial raw materials. The raw materials are weighed according to a chemical formula ratio Y_{1.9}S₃: Er_{0.01}, fully ground for 30 minutes, and placed in a quartz tube; and then the quartz tube is placed in a resistance furnace. CS₂ bubbles are introduced by Ar gas, or H₂S gas containing Ar carrier gas is directly used; then, the sample is heated to 1050°C at a speed of 10°C/min, preserved at the temperature for 2 hours and cooled to room temperature; and the sample is ground to obtain a target product. A 1500 nm laser is used as the excitation source and compared with reference embodiment 1. The performance indexes are shown in the following table.

Embodiment 2 to embodiment 17 can be obtained by the similar methods.

Embodiments 2-6 are comparative examples and do not fall within the scope of the claims.

| No. | m | n | k | x | Relative Brightness |
|---|---|---|---|---|---|
| Reference embodiment 1 | | | | | 100 |
| Embodiment 1 | 0 | 0 | C=Y, k=1 | 0.01 | 89 |
| Embodiment 2 | 0 | 0 | C=Y, k=0.9 | 0.05 | 127 |
| Embodiment 3 | 0 | 0 | C=Y, k=1 | 0.10 | 133 |
| Embodiment 4 | 0 | 0 | C=Y, k=1.1 | 0.15 | 136 |
| Embodiment 5 | 0 | 0 | C=Y, k=1 | 0.20 | 138 |
| Embodiment 6 | 0 | 0 | C=Y, k=1 | 0.40 | 102 |
| Embodiment 7 | A=Li, m=0.05 | 0 | C=Y, k=1 | 0.20 | 165 |
| Embodiment 8 | A=Na, m=0.10 | 0 | C=Y, k=1 | 0.20 | 157 |
| Embodiment 9 | A=K, m=0.20 | 0 | C=Y, k=1 | 0.20 | 153 |
| Embodiment 10 | 0 | B=Mg, n=0.02 | C=Y, k=1.1 | 0.20 | 146 |
| Embodiment 11 | 0 | B=Ca, n=0.04 | C=Y, k=1 | 0.20 | 144 |
| Embodiment 12 | 0 | B=Sr, n=0.08 | C=Y, k=1 | 0.20 | 141 |
| Embodiment 13 | A=Li, m=0.05 | B=Mg, n=0.02 | C=Y, k=0.9 | 0.20 | 169 |
| Embodiment 14 | A=Na, m=0.05 | B=Mg, n=0.02 | C=Gd, k=1 | 0.20 | 147 |
| Embodiment 15 | A=K, m=0.05 | B=Mg, n=0.02 | C=Lu, k=1 | 0.20 | 172 |
| Embodiment 16 | A=Li, m=0.05 | B=Mg, n=0.02 | C=La, k=1 | 0.20 | 153 |
| Embodiment 17 | A=Li, m=0.05 | B=Mg, n=0.02 | C=Sc, k=1 | 0.20 | 148 |

The influences of other parameters not listed in embodiments 1-17 on luminescence colors, luminescence intensity and thermal properties can also be obtained by the methods similar to those of embodiments 1-17. When A=Rb or Cs, there is a similar result as A=K, but Rb and Cs are more expensive. When A is used in combination, the performance is better. The combination of A=Li and K can make the particle size of the product more uniform. Under the condition of keeping the luminescence intensity unchanged, the reaction temperature can be appropriately reduced by 50-100°C. When B=Be, Ba, or Cd, there are similar results as B=Ca, but considering the environmental protection requirements, products containing these elements may encounter difficulties when applied. When B=Zn, the flow rate and the reducibility of a carrier gas atmosphere should be controlled. When C=Al, Ga or Bi, it is usually used for replacing no more than 30% of La, Gd, Lu, Y or Sc, which can improve the luminescence intensity by about 5-13%. When D=Er, the used ranges of the excitation wavelengths are 1450-1600 nm, 920-1150 nm and 780-860 nm. The three excitation wavelengths can be used separately or simultaneously, and the effect is similar to that of the 1500 nm excitation light source. The selection of the wavelengths of the excitation light source depends on the application conditions and the laser wavelengths available in bulk on the market. For luminescence brightness, infrared light in the wavelength range of 1450-1600 nm is used > infrared light in the wavelength range of 920-1150 nm is used > infrared light in the wavelength range of 780-860 nm is used. Especially, infrared light in the range of 1450-1600 nm has a safe wavelength for human eyes and has the highest brightness, which is particularly advantageous for application. In the above embodiment, a small amount of cosolvent is added to the raw materials, such as 0-20 wt% of NH₄Cl, NH₄F, MgF₂, CaF₂, SrF₂, BaF₂, etc., which can further improve the luminescence brightness by 5-28%. The combined use realizes better performance.

When RE=Er, the physical properties of the material can also be changed through combination and co-doping with other RE ions, such as luminescence colors and endothermic performance. If a small amount of (x=0.01-0.3) Mo and W is added, the red luminescence component in the luminescence spectrum can be significantly reduced, and the color purity of green luminescence can be increased by 2-10 times. If Ho, Tm or Pr is added, the red luminescence component in the luminescence spectrum can be increased; the color purity of red luminescence can be increased by 2-15 times; and the luminescence brightness is 110-180% of that of reference embodiment 3 under the same excitation condition. At the same time the color purity of red luminescence is 200-300% of that of reference embodiment 3. If Yb, Ce, Sm, Tb, Eu or Nd is added, the thermal properties can be significantly enhanced and the luminescence colors can be changed; and at the same power density, the temperature rise of the sample can be more than doubled.

When RE=Ho, the excitation wavelength can be changed to 1100-1190 nm, and the color purity of the green luminescence is more than 150% higher than that of RE=Er. When RE=Tm, the excitation wavelength can be changed to 1180-1260 nm and 760-850 nm, and the brightness of green luminescence is 150-300% of that of reference embodiment 2 under the same excitation conditions, thereby widening the application range. Through further combination with other RE, panchromatic luminescence can be obtained, or the color purity can be adjusted.

When the values of m, n, k and x are beyond the range of embodiments 1-17, such as m=0.2-2, n=0.1-6, k=0.3-0.9, k=1.1-2.5 and x=0.2-2, the sample also has a good luminescence effect, but the luminescence intensity is reduced by 5-53% compared with embodiments 1-17 under the same conditions.

### Embodiment 18: NaY_{0.9}S₂: Er_{0.1}

Y₂O₃ (99.99%), Er₂O₃ (99.99%) and Na₂CO₃(99-99%) are used as initial raw materials. The raw materials are weighed according to a chemical formula ratio NaY_{0.9}S₂: Er_{0.1}, fully ground for 30 minutes, and placed in a quartz tube; and then the quartz tube is placed in a resistance furnace. CS₂ bubbles are introduced by Ar gas; then, the sample is heated to 1050°C at a speed of 10°C/min, preserved at the temperature for 2 hours and cooled to room temperature; and the sample is ground to obtain a target product.

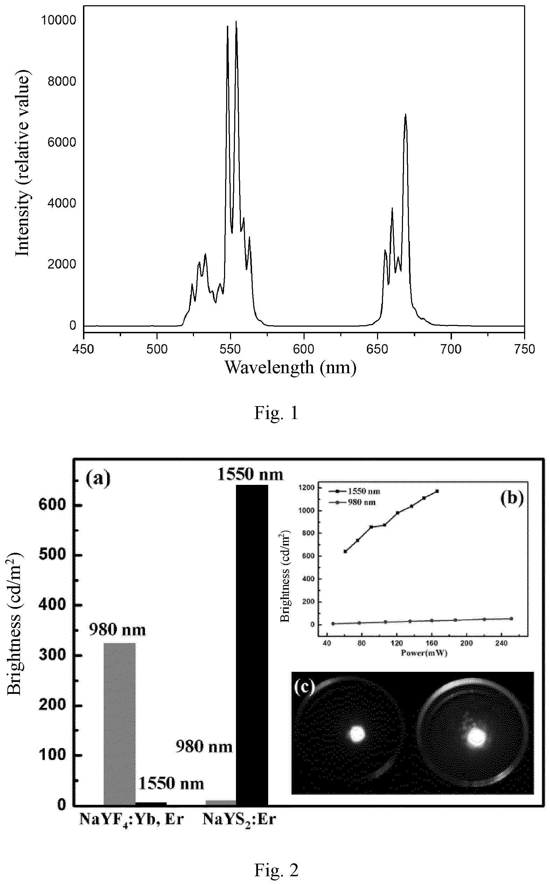

Fig. 1 shows the upconversion luminescence spectrum of NaY_{0.9}S₂: Er_{0.1} sample under 1550 nm excitation. It can be seen that the NaY_{0.9}S₂: Er_{0.1} sample shows green emission at 512-578 nm band and red emission at 640-698 nm, corresponding to Er³⁺ transitions at energy levels ⁴S_{3/2}→⁴I_{15/2}, ²H_{11/2}→⁴I_{15/2} and ⁴F_{9/2}→⁴I_{15/2}, respectively.

To further evaluate the upconversion luminescence performance of NaY_{0.9}S₂: Er_{0.1}, the luminescence brightness data of the NaY_{0.9}S₂: Er_{0.1} samples under the 980 nm and 1550 nm excitation of the same power are compared with reference embodiment 1 (Fig. 2). Under 1550 nm excitation, NaY_{0.9}S₂: Er_{0.1} has very high upconversion luminescence efficiency, and the brightness is -60 times that of 980 nm excitation, and even more than twice that of commercial NaYF₄:Yb, Er under 980 nm excitation.

Embodiment 19 to embodiment 37 can be obtained by the similar methods.

| No. | m | n | k | x | Relative |
|---|---|---|---|---|---|
| | | | | | Brightness |
| Reference embodiment 1 | | | | | 100 |
| Embodiment 19 | A=0.8 Li | 0 | C=Y, k=0.4 | 0.01 | 155 |
| Embodiment 20 | A=0.8 Na | 0 | C=Y, k=0.4 | 0.05 | 172 |
| Embodiment 21 | A=0.8 K | 0 | C=Y, k=0.4 | 0.10 | 225 |
| Embodiment 22 | A=0.4 Na, 0.4 K | 0 | C=Y, k=0.4 | 0.50 | 210 |
| Embodiment 23 | A=0.1 Li, 0.7 Na | 0 | C=Y, k=0.4 | 1.00 | 183 |
| Embodiment 24 | A=0.8 Na | 0 | C=Y, k=0.4 | 2.00 | 160 |
| Embodiment 25 | A=0.8 Na | 0 | C=Y, k=0.5 | 0.10 | 262 |
| Embodiment 26 | A=0.8 Na | 0 | C=Y, k=0.6 | 0.10 | 215 |
| Embodiment 27 | A=1.0 Na | 0 | C=Y, k=0.4 | 0.10 | 245 |
| Embodiment 28 | A=1.0 Na | 0 | C=Y, k=0.5 | 0.10 | 289 |
| Embodiment 29 | A=1.0 Na | 0 | C=Y, k=0.6 | 0.10 | 230 |
| Embodiment 30 | A=1.2 Na | 0 | C=Y, k=0.6 | 0.10 | 196 |
| Embodiment 31 | A=0.8 Na | B=Ca, 0.01 | C=Y, k=0.4 | 0.50 | 272 |
| Embodiment 32 | A=0.8 Na | B=Mg, 0.05 | C=Y, k=0.5 | 0.50 | 277 |
| Embodiment 33 | A=0.8 Na | B=Sr, 0.1 | C=Y, k=0.6 | 0.50 | 251 |
| Embodiment 34 | A=1.0 Na | B=Ca, 0.1 | C=Y, k=0.4 | 0.50 | 295 |
| Embodiment 35 | A=1.0 Na | B=Ca, 0.1 | C=La, k=0.4 | 0.50 | 295 |
| Embodiment 36 | A=1.0 Na | B=Ca, 0.1 | C=Gd, k=0.5 | 0.50 | 299 |
| Embodiment 37 | A=1.0 Na | B=Ca, 0.1 | C=Lu, k=0.6 | 0.50 | 258 |

The influences of other parameters not listed in embodiments 19-37 on luminescence colors, luminescence intensity and thermal properties can also be obtained by the methods similar to those of embodiments 19-37. The effects are similar to the example listed below in embodiments 1-17, but the luminescence intensity is higher than that listed below in embodiments 1-17 by 12-35%.

Embodiment 38 to embodiment 47 can be obtained by the similar methods to embodiments 19-37.

| No. | m | n | k | x | Relative Brightnes s |
|---|---|---|---|---|---|
| Reference embodiment 1 | | | | | 100 |
| Embodiment 38 | 0 | B=0.8 Ca | C=Y, k=0.8 | 0.01 | 105 |
| Embodiment 39 | 0 | B=0.7Ca, 0.1Mg | C=Y, k=1.0 | 0.05 | 132 |
| Embodiment 40 | 0 | B=0.8 Sr | C=Y, k=1.0 | 0.10 | 169 |
| Embodiment 41 | 0 | B=1.0 Ca | C=Y, k=1.2 | 0.50 | 155 |
| Embodiment 42 | 0 | B=1.2 Ca | C=Y, k=1.0 | 1.00 | 118 |
| Embodiment 43 | 0 | B=0.8 Ca | C=Y, k=1.0 | 2.00 | 105 |
| Embodiment 44 | A=0.05 Na | B=1.0 Ca | C=Y, k=1.05 | 0.20 | 183 |
| Embodiment 45 | A=0.1 Li | B=1.0 Sr | C=La, k=1.0 | 0.20 | 207 |
| Embodiment 46 | A=0.2 K | B=1.0 Ca | C=Gd k=1.0 | 0.20 | 214 |
| Embodiment 47 | A=0.02Na, 0.03K | B=1.0 Ca | C=Lu, k=1.3 | 0.20 | 196 |

The influences of other parameters not listed in embodiments 38-47 on luminescence colors, luminescence intensity and thermal properties can also be obtained by the methods similar to those of embodiments 38-47. The effects are similar to the example listed below in embodiments 1-17, but the luminescence intensity is higher than that listed below in embodiments 1-17 by 7-23%.

Embodiment 48 to embodiment 59 can be obtained by the similar methods to embodiments 38-47.

| No. | m | n | k | x | Relative Brightness |
|---|---|---|---|---|---|
| Reference embodiment 1 | | | | | 100 |
| Embodiment 48 | 0 | B=4.5 Ca | C=Y, k=1.8 | 0.01 | 132 |
| Embodiment 49 | 0 | B=5.0 Sr | C=Y, k=2.0 | 0.05 | 151 |
| Embodiment 50 | 0 | B=5.5 Ba | C=Y, k=2.2 | 0.10 | 243 |
| Embodiment 51 | 0 | B=4.5 Ca | C=Y, k=2.0 | 0.50 | 190 |
| Embodiment 52 | 0 | B=5.0 Sr | C=Y, k=2.0 | 1.00 | 214 |
| Embodiment 53 | 0 | B=5.5 Ba | C=Y, k=2.0 | 2.00 | 88 |
| Embodiment 54 | A=Li, m=0.05 | B=4.5 Ca | C=Y, k=2.0 | 0.20 | 294 |
| Embodiment 55 | A=Na, m=0.10 | B=5.0 Sr | C=Y, k=2.0 | 0.20 | 287 |
| Embodiment 56 | A=K, m=0.20 | B=5.5 Ba | C=Y, k=2.0 | 0.20 | 276 |
| Embodiment 57 | A=0.02 Li, 0.03 Na | B=0.2 Mg,4.5 Ca | C=La, k=2.0 | 0.20 | 325 |
| Embodiment 59 | 0 | B=5.0 Ca | C=Gd, k=2.0 | 0.20 | 236 |
| Embodiment 59 | 0 | B=5.0 Ca | C=Lu, k=2.0 | 0.20 | 198 |

The influences of other parameters not listed in embodiments 48-59 on luminescence colors, luminescence intensity and thermal properties can also be obtained by the methods similar to those of embodiments 48-59. The effects are similar to the example listed below in embodiments 1-17.

### Embodiment 60: NaY_{0.9}S₂: Er_{0.1}@NaY_{0.8}S₂:Yb_{0.1}, Er_{0.1}

Y₂O₃ (99.99%) and Er₂O₃ (99.99%) of a certain mass are weighed according to the stoichiometric ratio of NaY_{0.9}S₂: Er_{0.1} and stirred with appropriate amount of water and 6 mol/L hydrochloric acid to form rare earth chloride. An appropriate amount of oleic acid and octadecene are taken; and a certain amount of sulfur powder and sodium oleate are weighed, and mixed with the above rare earth chloride. The water and other low boiling point impurities are removed under vacuum environment at 120°C. Then, the solution is rapidly heated to 300°C and kept at the temperature for 1 hour. The sample is washed with water and ethanol and dried for many times to obtain the NaY_{0.9}S₂: Er_{0.1} sample. Y₂O₃ (99.99%), Yb₂O₃ (99.99%) and Er₂O₃ (99.99%) are weighed to prepare the rare earth chlorides. The above steps are repeated and the prepared NaY_{0.9}S₂: Er_{0.1} is added into the mixture and kept at 300°C for 1 hour to form a core-shell structure Na Y_{0.9}S₂: Er_{0.1}@NaY_{0.8}S₂:Yb_{0.1}, Er_{0.1} sample.

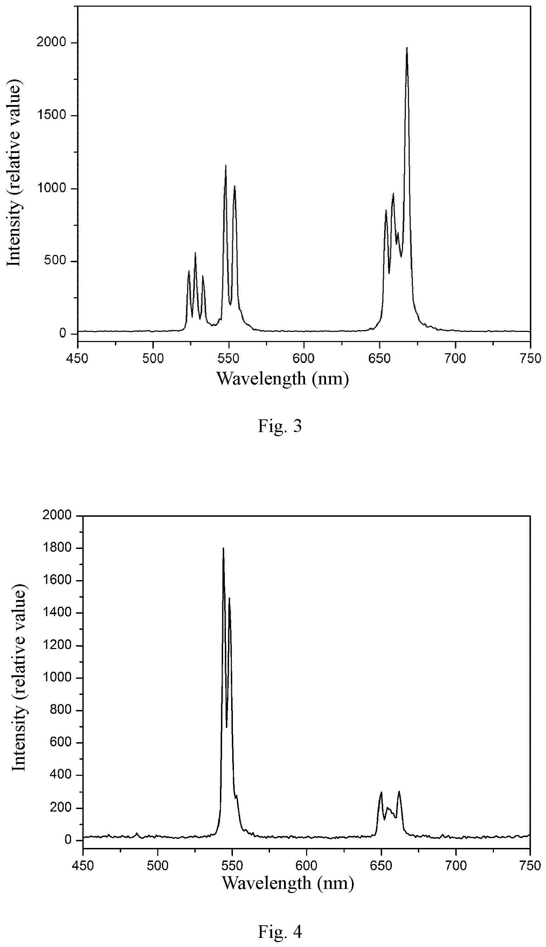

Fig. 3 shows the upconversion luminescence spectrum of NaY_{0.9}S₂: Er_{0.1}@NaY_{0.8}S₂:Yb_{0.1}, Er_{0.1} sample under 1550 nm excitation. The spectrum is formed by two groups of bands in the visible part. Green emission at 512-578 nm band and red emission at 640-698 nm correspond to transitions of Er³⁺ ions at ⁴S_{3/2}→⁴I_{15/2}, ²H_{11/2}→⁴I_{15/2} and ⁴F_{9/2}→⁴I_{15/2}, respectively. Compared with the NaY_{0.9}S₂: Er_{0.1} sample, NaY_{0.9}S₂: Er_{0.1}@NaY_{0.8}S₂:Yb_{0.1}, Er_{0.1} is similar in peak pattern, but the relative emission intensity of red and green light bands is quite different. NaY_{0.9}S₂: Er_{0.1} shows strong green light and weak red light, and NaY_{0.9}S₂: Er_{0.1}@NaY_{0.8}S₂:Yb_{0.1} and Er_{0.1} shows strong red light and weak green light. Under the same excitation conditions, the pyrogenetic capacity of the sample is 3 times that of embodiment 18, and thus the sample can be used in occasions where both light and thermal effects are required.

### Embodiment 61: NaGd_{0.9}S₂: Er_{0.1}@NaGd_{0.78}S₂: Er_{0.18}, Ho_{0.05}

Y₂O₃ (99.99%) and Er₂O₃ (99.99%) of a certain mass are weighed according to the stoichiometric ratio of NaGd_{0.9}S₂: Er_{0.1} and stirred with appropriate amount of water and 6 mol/L hydrochloric acid to form rare earth chloride. An appropriate amount of oleic acid and octadecene are taken; and a certain amount of sulfur powder and sodium oleate are weighed, and mixed with the above rare earth chloride. The water and other low boiling point impurities are removed under vacuum environment at 120°C. Then, the solution is rapidly heated to 300°C and kept at the temperature for 1 hour. The sample is washed with water and ethanol and dried for many times to obtain the NaGd_{0.9}S₂: Er_{0.1} sample. Y₂O₃ (99.99%), Er₂O₃ (99.99%) and Ho₂O₃ (99.99%) are weighed to prepare the rare earth chlorides. The above steps are repeated and the prepared NaY_{0.9}S₂: Er_{0.1} is added into the mixture and kept at 300°C for 1 hour to form a core-shell structure NaGd_{0.9}S₂: Er_{0.1}@NaGd_{0.78}S₂:Er_{0.18}, Ho_{0.05} sample.

Fig. 4 shows the emission spectrum of NaGd_{0.9}S₂: Er_{0.1}@NaGd_{0.78}S₂:Er_{0.18}, Ho_{0.05} sample under 980 nm laser excitation. The emission spectrum in Fig. 3 is formed by two groups of bands: 1) The red luminescence band located at band of 646-666 nm: there are three emission peaks, located at 650 nm, 654 nm and 661 nm respectively, corresponding to the ⁵F₅ → ⁵I₈ transition of Ho³⁺ ions. 2) The green luminescence band located at band of 535-565 nm: there are two emission peaks, located at 543 nm and 548 nm respectively, corresponding to the ⁵F₄ → ⁵I₈ and ⁵S₂ → ⁵I₈ transitions of Ho³⁺ ions.

### Embodiment 62: NaY_{0.8}S₂:Er_{0.10}, Nd_{0.10}@NaY_{0.89}S₂: Yb_{0.08}, Nd_{0.01}, Tm_{0.02}

Y₂O₃ (99.99%), Er₂O₃ (99.99%) and Nd₂O₃ (99.99%) of a certain mass are weighed according to the stoichiometric ratio of NaY_{0.8}S₂:Er_{0.10}, Nd_{0.10} and stirred with appropriate amount of water and 6 mol/L hydrochloric acid to form rare earth chloride. An appropriate amount of oleic acid and octadecene are taken; and a certain amount of sulfur powder and sodium oleate are weighed, and mixed with the above rare earth chloride. The water and other low boiling point impurities are removed under vacuum environment at 120°C. Then, the solution is rapidly heated to 300°C and kept at the temperature for 1 hour. The sample is washed with water and ethanol and dried for many times to obtain the NaY_{0.8}S₂:Er_{0.10}, Nd_{0.10} sample. Y₂O₃ (99.99%), Yb₂O₃ (99.99%) and Tm₂O₃ (99.99%) are weighed to prepare the rare earth chlorides. The above steps are repeated and the prepared NaY_{0.8}S₂:Er_{0.10}, Nd_{0.10} is added into the mixture and kept at 300°C for 1 hour to form a core-shell structure NaY_{0.8}S₂:Er_{0.10}, Nd_{0.10@}NaY_{0.80}S₂: Yb_{0.08}, Nd_{0.01}, Tm_{0.02} sample.

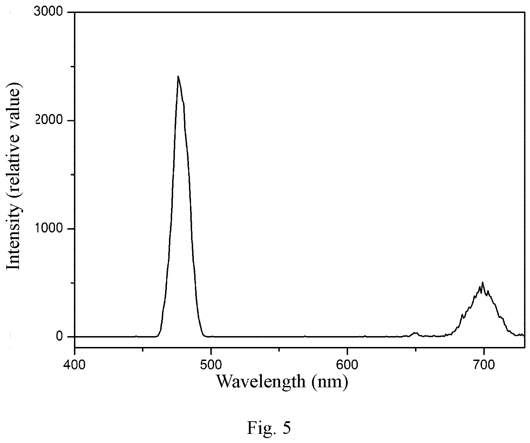

Fig. 5 shows the emission spectrum of NaY_{0.8}S₂:Er_{0.10}, Nd_{0.10@}NaY_{0.80}S₂: Yb_{0.08}, Nd_{0.01}, Tm_{0.02} sample under 980 nm laser excitation. The spectrum in the figure is formed by three groups of bands: 1) The blue luminescence band located at band of 460-499 nm, and the peak value is located at 476 nm, which belongs to the ¹G₄ → ³H₆ transition of Tm³⁺; 2) The red luminescence band located at band of 639-654 nm, and the peak value is located at 650 nm, which belongs to the ¹G₄ → ³F₄ transition of Tm³⁺ ions; and 3) the red luminescence band located at band of 670-726 nm, and the peak value is located at 698 nm, which belongs to the ³F₃ → ³H₆ transition of Tm³⁺ ions. The blue light emission band is significantly stronger than the two red light emission bands, so NaY_{0.8}S₂:Er_{0.10}, Nd_{0.10@}NaY_{0.80}S₂: Yb_{0.08}, Nd_{0.01}, Tm_{0.02} samples show bright blue luminescence under observation by naked eyes.

### Embodiment 63: NaY_{0.9}S₂: Er_{0.10}@NaY_{0.9}S₂: Yb_{0.08}, Nd_{0.02}

Y₂O₃ (99.99%) and Er₂O₃ (99.99%) of a certain mass are weighed according to the stoichiometric ratio of NaY_{0.9}S₂: Er_{0.10} and stirred with appropriate amount of water and 6 mol/L hydrochloric acid to form rare earth chloride. An appropriate amount of oleic acid and octadecene are taken; and a certain amount of sulfur powder and sodium oleate are weighed, and mixed with the above rare earth chloride. The water and other low boiling point impurities are removed under vacuum environment at 120°C. Then, the solution is rapidly heated to 300°C and kept at the temperature for 1 hour. The sample is washed with water and ethanol and dried for many times to obtain the NaY_{0.9}S₂:Er_{0.10} sample. Y₂O₃ (99.99%), Yb₂O₃ (99.99%) and Nd₂O₃ (99.99%) are weighed to prepare the rare earth chlorides. The above steps are repeated and the prepared NaY_{0.9}S₂:Er_{0.10} is added into the mixture and kept at 300°C for 1 hour to form a core-shell structure NaY_{0.9}S₂:Er_{0.10}@NaY_{0.9}S₂: Yb_{0.08}, Nd_{0.02} sample.

The upconversion luminescence spectrum of the NaY_{0.9}S₂:Er_{0.10}@NaY_{0.9}S₂: Yb_{0.08}, Nd_{0.02} sample is formed by three groups of bands: green emission located at the band of 510-570 nm, red emission at the band of 640-700 nm and infrared emission at the band of 710-900 nm, corresponding to ⁴S_{3/2}→⁴I_{15/2}, ²H_{11/2}→⁴I_{15/2} and ⁴F_{9/2}→⁴I_{15/2} transitions of Er³⁺ ions and ⁴F_{7/2}/⁴F_{5/2}/⁴F_{3/2}→⁴I_{9/2} transitions of Nd³⁺ ions, respectively. Compared with the NaY_{0.9}S₂: Er_{0.1} sample, the pyrogenetic capacity of the NaY_{0.9}S₂:Er_{0.10}@NaY_{0.9}S₂: Yb_{0.08}, Nd_{0.02} sample is significantly improved.

### Embodiment 64: NaY_{0.9}S₂: Er_{0.10}@NaY_{0.9}S₂: Yb_{0.08}, Sm_{0.02}

Y₂O₃ (99.99%) and Er₂O₃ (99.99%) of a certain mass are weighed according to the stoichiometric ratio of NaY_{0.9}S₂: Er_{0.10} and stirred with appropriate amount of water and 6 mol/L hydrochloric acid to form rare earth chloride. An appropriate amount of oleic acid and octadecene are taken; and a certain amount of sulfur powder and sodium oleate are weighed, and mixed with the above rare earth chloride. The water and other low boiling point impurities are removed under vacuum environment at 120°C. Then, the solution is rapidly heated to 300°C and kept at the temperature for 1 hour. The sample is washed with water and ethanol and dried for many times to obtain the NaY_{0.9}S₂:Er_{0.10} sample. Y₂O₃ (99.99%),Yb₂O₃ (99.99%) and Sm₂O₃ (99.99%) are weighed to prepare the rare earth chlorides. The above steps are repeated and the prepared NaY_{0.9}S₂:Er_{0.10} is added into the mixture and kept at 300°C for 1 hour to form a core-shell structure NaY_{0.9}S₂:Er_{0.10}@NaY_{0.9}S₂: Yb_{0.08}, Sm_{0.02} sample.

The upconversion luminescence spectrum of the NaY_{0.9}S₂:Er_{0.10}@NaY_{0.9}S₂: Yb_{0.08}, Sm_{0.02} sample is formed by three groups of bands: green emission located at the band of 550-580 nm and red emission at the bands of 580-630 nm and 630-675 nm, corresponding to ⁴G_{5/2}→⁶H_{5/2}, ⁴G_{5/2}→⁶H_{7/2}, ⁴G_{5/2}→⁶H_{9/2} transitions of Sm³⁺ ions, respectively. Compared with the NaY_{0.9}S₂: Er_{0.1} sample, the NaY0.9S2:Er0.10@NaY0.9S2: Yb0.08, Sm0.02 sample can generate much heat.

### Embodiment 65: NaY_{0.9}S₂: Er_{0.10}@NaY_{0.9}S₂: Eu_{0.02}

Y₂O₃ (99.99%) and Er₂O₃ (99.99%) of a certain mass are weighed according to the stoichiometric ratio of NaY_{0.9}S₂: Er_{0.10} and stirred with appropriate amount of water and 6 mol/L hydrochloric acid to form rare earth chloride. An appropriate amount of oleic acid and octadecene are taken; and a certain amount of sulfur powder and sodium oleate are weighed, and mixed with the above rare earth chloride. The water and other low boiling point impurities are removed under vacuum environment at 120°C. Then, the solution is rapidly heated to 300°C and kept at the temperature for 1 hour. The sample is washed with water and ethanol and dried for many times to obtain the NaY_{0.9}S₂:Er_{0.10} sample. Y₂O₃ (99.99%), Yb₂O₃ (99.99%) and Eu₂O₃ (99.99%) are weighed to prepare the rare earth chlorides. The above steps are repeated and the prepared NaY_{0.9}S₂:Er_{0.10} is added into the mixture and kept at 300°C for 1 hour to form a core-shell structure NaY_{0.9}S₂:Er_{0.10}@NaY_{0.9}S₂: Yb_{0.08}, Eu_{0.02} sample.

The upconversion luminescence spectrum of the NaY_{0.9}S₂:Er_{0.10}@NaY_{0.9}S₂: Yb_{0.08}, Eu_{0.02} sample is formed by three groups of bands: green emission located at the band of 510-580 nm and red emission at the bands of 580-630 nm and 630-675 nm. Compared with the NaY_{0.9}S₂: Er_{0.1} sample, the red luminescence of the NaY_{0.9}S₂:Er_{0.10}@NaY_{0.9}S₂: Yb_{0.08}, Eu_{0.02} sample is significantly enhanced.

Upconversion luminescence samples co-doped with Pr, Tb and the like can be obtained by using similar methods.

## Claims

1. The use of a polysulfide phosphor for upconversion luminescence, wherein a general formula of composition of the polysulfide phosphor is: *m*A₂S·*n*BS·*k*C₂₋ₓS₃:Dₓ; A is one or more than one of Li, Na, K, Rb and Cs, and B is one or more than one of Be, Mg, Ca, Sr, Ba, Zn and Cd; C is one or more than one of La, Gd, Lu, Y, Sc, Al, Ga and Bi; D is one or more than one of Ho, Er, Tm and Pr, optionally co-doped with Mo, W, Ce, Sm, Tb, Yb, Eu or Nd; x=0.0001-2;
n=0-0.1, m = 0.8-1.2 and k =0.4-0.6;
m=0-0.2, n =0.8-1.2, and k = 0.8-1.2; or
m=0-0.2, n = 4.5-5.5, and k =1.8-2.2;
wherein when D contains Er, x value is 0.05-2; the phosphor is excitable within an excitation wavelengths range of 1450-1600 nm and/or 780-860 nm;
wherein when D contains Ho, x value is 0.02-2 and the phosphor is excitable within an excitation wavelengths range of 1100-1190 nm;
wherein when D contains Tm, x value is 0.01-2; the phosphor is excitable within an excitation wavelengths range of 1180-1260 nm and/or 760-850 nm.

2. The use according to claims 1, wherein the phosphor emits ultraviolet, blue, blue-green, green, red or near-infrared light when excited by near infrared light at 750-1650 nm.

## Patentansprüche

1. Die Verwendung eines Polysulfid-Leuchtstoffs für Hochkonversions-Lumineszenz, wobei eine allgemeine Formel der Zusammensetzung des Polysulfid-Leuchtstoffs folgende ist: *m*A₂S•*n*BS•*k*C_{2-X}S₃:Dₓ; A eines oder mehr als eines von Li, Na, K, Rb und Cs ist und B eines oder mehr als eines von Be, Mg, Ca, Sr, Ba, Zn und Cd ist; C eines oder mehr als eines von La, Gd, Lu, Y, Sc, AI, Ga und Bi ist; D eines oder mehr als eines von Ho, Er, Tm und Pr ist, optional kodotiert mit Mo, W, Ce, Sm, Tb, Yb, Eu oder Nd; x = 0,0001-2;
n = 0-0,1, m = 0,8-1,2 und k = 0,4-0,6;
m = 0-0,2, n = 0,8-1,2 und k = 0,8-1,2; oder
m = 0-0,2, n = 4,5-5,5 und k = 1,8-2,2;
wobei, wenn D Er enthält, der x-Wert 0,05-2 beträgt; der Leuchtstoff innerhalb eines Anregungswellenlängenbereichs von 1450-1600 nm und/oder 780-860 nm anregbar ist;
wobei, wenn D Ho enthält, der x-Wert 0,02-2 beträgt und der Leuchtstoff innerhalb eines Anregungswellenlängenbereichs von 1100-1190 nm anregbar ist;
wobei, wenn D Tm enthält, der x-Wert 0,01-2 beträgt; der Leuchtstoff innerhalb eines Anregungswellenlängenbereichs von 1180-1260 nm und/oder 760-850 nm anregbar ist.

2. Verwendung gemäß Anspruch 1, wobei der Leuchtstoff ultraviolettes, blaues, blaugrünes, grünes, rotes oder nahinfrarotes Licht emittiert, wenn er durch nahinfrarotes Licht bei 750-1650 nm angeregt wird.

## Revendications

1. L'utilisation d'un phosphore polysulfure pour la luminescence par conversion ascendante *(upconversion),* où une formule générale de composition du phosphore polysulfure est : *m*A₂S•*n*BS•*k*C₂₋ₓS₃:Dₓ ; A est un élément ou plus de un élément parmi Li, Na, K, Rb et Cs, et B est un élément ou plus de un élément parmi Be, Mg, Ca, Sr, Ba, Zn et Cd ; C est un élément ou plus de un élément parmi La, Gd, Lu, Y, Sc, AI, Ga et Bi ; D est un élément ou plus de un élément parmi Ho, Er, Tm et Pr, facultativement co-dopé avec Mo, W, Ce, Sm, Tb, Yb, Eu ou Nd ; x = 0,0001-2 ;
n = 0-0,1, m = 0,8-1,2 et k = 0,4-0,6 ;
m = 0-0,2, n = 0,8-1,2, et k = 0,8-1,2 ; ou
m = 0-0,2, n = 4,5-5,5, et k = 1,8-2,2 ;
où lorsque D contient Er, la valeur de x est 0,05-2 ; le phosphore est excitable dans une gamme de longueurs d'onde d'excitation de 1450-1600 nm et/ou 780-860 nm ;
où lorsque D contient Ho, la valeur de x est 0,02-2 et le phosphore est excitable dans une gamme de longueurs d'onde d'excitation de 1100-1190 nm ;
où lorsque D contient Tm, la valeur de x est 0,01-2 ; le phosphore est excitable dans une gamme de longueurs d'onde d'excitation de 1180-1260 nm et/ou 760-850 nm.

2. L'utilisation selon la revendication 1, où le phosphore émet de la lumière ultraviolette, bleue, bleue-verte, verte, rouge ou proche infrarouge lorsqu'il est excité par de la lumière proche infrarouge à 750-1650 nm.
